# FASCICULE DE BREVET EUROPEEN

(11) **EP 4 154 046 B1**
(45) Date de publication et mention de la délivrance du brevet: **03.04.2024**
(21) Numéro de dépôt: 22705444.2
(22) Date de dépôt: 01.02.2022
(51) Int. Cl.: G02B 17/06, G02B 23/06, G02B 26/06, G02B 26/08, G02B 27/00

(54) **INSTRUMENT D'IMAGERIE**
BILDGEBUNGSINSTRUMENT
IMAGING INSTRUMENT

(30) Priorité: 05.02.2021 FR 2101138
(43) Date de publication de la demande: 29.03.2023
(73) Titulaire: Airbus Defence and Space SAS, 31402 Toulouse Cedex 4 (FR)
(72) Inventeur: COATANTIEC, Claude, 31402 TOULOUSE CEDEX 4 (FR); PAOLETTI, Anouck, 31402 TOULOUSE CEDEX 4 (FR); BOYADJIAN, Joël, 31402 TOULOUSE CEDEX 4 (FR)
(74) Mandataire: Plasseraud IP
(86) Numéro de dépôt international: PCT/FR2022/050178
(87) Numéro de publication internationale: WO 2022/167750

(56) Documents cités:
- VIARD T ET AL: "Active optics for next generation of space observation instruments", SPIE PROCEEDINGS; [PROCEEDINGS OF SPIE ISSN 0277-786X], SPIE, US, vol. 11180, 12 juillet 2019 (2019-07-12), pages 1118008-1118008, XP060125448, DOI: 10.1117/12.2535927 ISBN: 978-1-5106-3673-6
- JAHN WILFRIED ET AL: "Innovative focal plane design for large space telescopes", PROCEEDINGS OF SPIE; [PROCEEDINGS OF SPIE ISSN 0277-786X VOLUME 10524], SPIE, US, vol. 10562, 25 septembre 2017 (2017-09-25) , pages 105624Y-105624Y, XP060093688, DOI: 10.1117/12.2296237 ISBN: 978-1-5106-1533-5
- COSTES V ET AL: "Active optics for next generation space telescopes", PROCEEDINGS OF SPIE; [PROCEEDINGS OF SPIE ISSN 0277-786X VOLUME 10524], SPIE, US, vol. 10398, 5 septembre 2017 (2017-09-05), pages 103980S-103980S, XP060093035, DOI: 10.1117/12.2274791 ISBN: 978-1-5106-1533-5

## Description

### Domaine technique

La présente description concerne un instrument d'imagerie, un satellite qui est équipé d'un tel instrument et un procédé de saisie d'image.

### Technique antérieure

L'imagerie réalisée à partir d'un satellite est un domaine technique très développé pour de nombreuses applications. Certaines de ces applications nécessitent que l'instrument d'imagerie qui est utilisé fournisse des résolutions très fines. Or des défauts de forme de la surface du miroir primaire d'un télescope qui est utilisé pour de telles applications comptent parmi les causes de perte de résolution qui sont les plus importantes. De tels défauts de forme peuvent résulter de la fabrication du miroir primaire, ou résulter de contraintes et/ou d'inhomogénéités thermiques qui sont subies par le miroir primaire pendant que le télescope est utilisé. La forme du front d'onde de la lumière qui est réfléchie par le miroir primaire est altérée par de tels défauts, et à cause de cela l'image d'une source ponctuelle de lumière qui est formée dans le plan focal du télescope n'est pas un point mais une tache qui augmente en taille alors qu'elle est optimale en l'absence de défauts du miroir primaire. Un tel élargissement de la tache d'image est à l'origine de la perte de résolution de l'instrument d'imagerie.

Une autre difficulté qui intervient dans la conception d'un instrument d'imagerie destiné à être utilisé à bord d'un satellite provient de l'existence de distorsions optiques qui affectent l'image formée dans le plan focal. En effet, pour un mode de saisie d'image de type push-broom, l'image est saisie pendant son déplacement dans le plan focal, qui résulte en général du déplacement du satellite sur son orbite. Pour cela, des capteurs d'image à décalage temporel et intégration, couramment désignés par TDI pour «Time Delay Integration» en anglais, sont utilisés. De tels capteurs TDI réalisent des accumulations de signaux de détection qui sont synchrones avec le déplacement de l'image le long des colonnes du capteur. Le parallélisme entre la direction des colonnes de chaque capteur TDI qui est disposé dans le plan focal et la direction locale de déplacement de l'image est alors essentielle. Or en présence de distorsions de l'image, par exemple des distorsions en barillet ou en coussinet, la direction locale de déplacement de l'image varie entre des endroits différents à l'intérieur du plan focal. Chaque capteur TDI doit alors être orienté parallèlement à la direction apparente de déplacement d'image qui est effective à l'endroit où il se trouve. En outre, les distorsions sont d'autant plus pénalisantes que chaque capteur TDI possède un grand nombre d'étages pour procurer une meilleure sensibilité à des faibles niveaux de lumière, car la direction locale de déplacement de l'image varie alors sensiblement le long des colonnes de certains des capteurs TDI. Enfin, les distorsions provoquent aussi des variations de vitesse de déplacement de l'image à l'intérieur du plan focal, en fonction de la position de l'angle de champ, et des désynchronisations des fonctionnements des capteurs TDI par rapport aux déplacements locaux d'image en résultent. Une méthode possible pour compenser les distorsions et recouvrer une compatibilité avec l'utilisation de capteurs TDI consiste à utiliser une surface de support des capteurs qui n'est pas plane, c'est-à-dire qui est concave ou convexe. Mais l'assemblage du plan focal devient alors complexe, et ce d'autant plus lorsqu'il contient un grand nombre de capteurs TDI.

Enfin, l'intégration d'un instrument d'imagerie dans un satellite est une étape difficile, surtout lorsque l'instrument comporte plusieurs voies d'imagerie dont les positions relatives doivent être ajustées précisément. Il est alors essentiel que la conception de l'instrument d'imagerie prenne directement en compte les difficultés de l'étape de son intégration dans le satellite, afin que cette étape soit réduite en durée et en coût.

Les trois articles suivants :
«Active optics for next génération of space observation instruments» de Viard T.
   et al, SPIE Proceedings, vol. 11180, p. 1118008, 12 juillet 2019,
«Innovative focal plane design for large space télescopes» de Wilfried J. et al, Proceedings of SPIE, vol. 10562, p. 105624Y, 25 septembre 2017, et
«Active optics for next génération of space télescopes» de Costes V. et al, Proceedings of SPIE, vol. 10524, p. 103980S, 5 septembre 2017
divulguent de disposer un miroir déformable qui est situé dans la pupille de sortie d'un télescope.

### Problème technique

A partir de cette situation, un but de la présente invention est de résoudre ou réduire l'un au moins des problèmes techniques cités précédemment, par rapport aux instruments d'imagerie connus de l'art antérieur.

Plus particulièrement, l'invention a pour but de supprimer au moins en partie des dégradations de la résolution optique qui résultent de défauts de forme de la surface réfléchissante du miroir primaire d'un télescope.

Un but annexe de l'invention est de réduire les distorsions qui affectent l'image qui est formée dans le plan focal par l'instrument d'imagerie.

Enfin, un autre but annexe de l'invention est de proposer une architecture d'instrument d'imagerie à deux voies, qui facilite l'étape d'intégration dans un satellite.

### Résumé de l'invention

Pour atteindre l'un au moins de ces buts ou un autre, un premier aspect de l'invention propose un nouvel instrument d'imagerie qui comprend :
- un miroir primaire, un miroir secondaire et un miroir tertiaire qui constituent ensemble un télescope de type Korsch, le miroir primaire constituant en outre une pupille d'entrée du télescope ;
- un ensemble de saisie d'image, qui est situé dans un plan focal du télescope de façon à saisir une image formée par de la lumière qui est réfléchie successivement par le miroir primaire, le miroir secondaire puis le miroir tertiaire ;
- un miroir déformable, qui est placé dans une pupille du télescope autre que la pupille d'entrée ; et
- un contrôleur, qui est adapté pour ajuster une forme du miroir déformable, d'une manière variable entre des zones différentes de ce miroir déformable, de façon à compenser au moins un défaut de forme du miroir primaire.

Grâce à l'utilisation d'un télescope de type Korsch, l'instrument d'imagerie présente une courbure de champ qui est faible ou très faible, si bien que l'image qui est saisie peut être nette dans une zone étendue du plan focal. Il est ainsi possible de disposer plusieurs capteurs d'image dans le plan focal, afin que l'instrument d'imagerie possède un champ d'entrée qui soit grand. Pour une utilisation de l'instrument en mode push-broom, la largeur de fauchée peut ainsi être grande en utilisant plusieurs capteurs d'image qui sont décalés les uns par rapport aux autres dans le plan focal, avec une composante de décalage qui est perpendiculaire au déplacement de l'image.

En outre, grâce au placement du miroir déformable dans une pupille de l'instrument d'imagerie, le miroir déformable est conjugué optiquement avec le miroir primaire. Il est ainsi possible de compenser un relief ou un creux qui existe localement dans la surface du miroir primaire, par rapport à sa forme nominale, en créant une déformation locale opposée dans la surface du miroir déformable, à un endroit de ce dernier qui est conjugué optiquement avec le relief ou creux du miroir primaire. Ainsi, l'écart de longueur de chemin optique qui est provoqué par le défaut dans la forme du miroir primaire, et qui altère la forme du front d'onde, est compensé par le miroir déformable. Le front d'onde présente alors de nouveau une forme nominale en aval du miroir déformable, jusqu'au plan focal. Ainsi, les défauts qui sont éventuellement présents dans la forme du miroir primaire ne dégradent plus significativement la résolution de l'instrument d'imagerie. En outre, d'après la conception du télescope de Korsch, la pupille où se trouve le miroir déformable est de taille réduite par rapport au miroir primaire, ce qui permet de compenser les défauts de forme de ce dernier avec un modèle de miroir déformable aux dimensions limitées.

D'après la définition des pupilles d'un instrument optique imageur, la pupille où se trouve le miroir déformable est conjuguée optiquement avec la pupille d'entrée par le miroir secondaire ou par l'association des deux miroirs secondaire et tertiaire, et éventuellement en outre par des composants supplémentaires du télescope, le cas échéant. Dans le jargon de l'Homme du métier, il s'agit d'une pupille intermédiaire ou de la pupille de sortie du télescope. En fonction de la conception du télescope, notamment lorsqu'il est de type Korsch, le télescope peut ne pas avoir de pupille intermédiaire qui soit réelle. Dans ce cas, le miroir déformable est placé dans la pupille de sortie du télescope. De façon générale, le miroir déformable peut être placé de préférence dans la pupille de sortie du télescope.

L'association du miroir déformable avec le contrôleur permet de compenser des défauts de forme du miroir primaire qui sont statiques ou dynamiques. On entend par défauts statiques, des défauts qui sont permanents et qui peuvent par exemple résulter de la fabrication du miroir primaire. A l'inverse, des défauts dynamiques affectent la forme du miroir primaire de façon variable dans le temps. Ces derniers peuvent être générés notamment par des contraintes ou des gradients thermiques qui sont subis temporairement par le miroir primaire.

Selon une caractéristique supplémentaire de l'invention, le miroir déformable possède une forme de base qui est courbe, en plus d'ajustements de la forme de ce miroir déformable qui sont produits par le contrôleur. Sa forme de base qui est courbe est alors adaptée pour réduire des distorsions de l'image formée dans le plan focal par rapport un miroir plan qui serait disposé à la place du miroir déformable. Ainsi, lorsque l'ensemble de saisie d'image comprend plusieurs capteurs TDI, il n'est pas nécessaire d'utiliser une surface qui soit courbe pour supporter ces capteurs TDI, car la distorsion d'image est compensée par la forme de base du miroir déformable. Les capteurs TDI peuvent alors être montés dans le plan focal sur un support plan, ce qui facilite leur assemblage.

Dans diverses applications de l'instrument d'imagerie, cet instrument peut être adapté pour fonctionner en mode push-broom, ou pour saisir des images en mode statique, couramment désigné par mode «snapshop» ou «staring», avec un capteur d'image de type matriciel pour constituer l'ensemble de saisie d'image.

Possiblement, le contrôleur peut être adapté en outre pour ajuster la forme du miroir déformable de façon à compenser au moins un défaut de position d'au moins un composant optique de l'instrument d'imagerie, notamment un défaut de position du miroir secondaire ou du miroir tertiaire au sein du télescope, en plus de compenser les défauts de forme du miroir primaire. Le défaut de position du composant optique qui peut ainsi être compensé selon l'invention peut être un défaut longitudinal de position, c'est-à-dire que le défaut consiste en un décalage du composant optique par rapport à sa position nominale, qui est parallèle à la direction de propagation de la lumière au niveau du composant. Alternativement, le décalage peut être transversal ou oblique par rapport à la direction de propagation de la lumière, ou encore le défaut peut consister en un écart d'inclinaison du composant par rapport à la configuration nominale de l'instrument d'imagerie.

En outre, la forme de base du miroir déformable qui est courbe procure un degré de liberté supplémentaire pour compenser les distorsions en même temps que réduire le tirage optique, c'est-à-dire réduire la longueur du chemin optique entre le miroir tertiaire et l'ensemble de saisie d'image. Une combinaison améliorée peut ainsi être réalisée, entre un faible encombrement de l'instrument d'imagerie et un niveau de distorsion qui est faible ou très faible.

De préférence, la pupille où est placé le miroir déformable est située sur un trajet optique de la lumière qui forme l'image saisie, entre le miroir tertiaire et le plan focal. Cette pupille peut alors être la pupille de sortie du télescope.

Lorsque l'ensemble de saisie d'image comprend plusieurs capteurs TDI, ceux-ci peuvent être disposés dans le plan focal avec des directions de colonnes respectives qui sont toutes parallèles à un plan commun, et présenter entre eux des composantes de décalages qui sont perpendiculaires aux directions de colonnes, à l'intérieur du plan focal. Avantageusement, les capteurs TDI peuvent présenter en outre, entre deux capteurs TDI qui sont voisins, des composantes additionnelles de décalages qui sont parallèles aux directions de colonnes, à l'intérieur du plan focal. Ces composantes additionnelles de décalages peuvent être utiles pour procurer des recouvrements entre les segments d'image qui sont saisis par des capteurs TDI voisins, ou pour résoudre des difficultés d'encombrement des capteurs les uns par rapport aux autres dans le plan focal.

Possiblement, les directions de colonnes des capteurs TDI peuvent en outre être décalées angulairement entre des capteurs séparés, autour d'axes respectifs de rotation qui sont perpendiculaires au plan commun de toutes ces directions de colonnes. De cette façon, la direction de colonnes de chaque capteur TDI peut être superposée exactement à la direction locale de déplacement de l'image dans le plan focal, à l'endroit où se trouve ce capteur TDI.

Possiblement, l'instrument d'imagerie peur comprendre deux voies d'imagerie, selon la combinaison suivante de celles-ci :
une première des voies d'imagerie comprend le télescope de type Korsch, le miroir déformable et l'ensemble de saisie d'image, et
une seconde des voies d'imagerie comprend un télescope additionnel et un ensemble de saisie d'image additionnel qui est situé dans un plan focal du télescope additionnel,
les miroirs primaire et secondaire étant communs au télescope de type Korsch et au télescope additionnel, et
l'instrument d'imagerie comprenant en outre un séparateur de faisceau qui est situé sur un trajet de la lumière entre le miroir secondaire et un miroir tertiaire du télescope additionnel, de façon à séparer spatialement l'une de l'autre les deux voies d'imagerie en aval de ce séparateur de faisceau, par rapport à un sens de propagation de la lumière dans l'instrument d'imagerie.

Pour une telle réalisation de l'instrument à deux voies d'imagerie, le séparateur de faisceau peut être superposé à une image intermédiaire qui est formée par les miroirs primaire et secondaire lors d'une utilisation de l'instrument d'imagerie, de sorte que le séparateur de faisceau ait un fonctionnement par division de champ. Avantageusement, le séparateur de faisceau peut être constitué par un miroir superposé à une partie de l'image intermédiaire qui est dédiée à l'une des voies d'imagerie, à l'exclusion d'une partie complémentaire de l'image intermédiaire qui est dédiée à l'autre voie d'imagerie.

Encore pour une telle réalisation à deux voies d'imagerie, l'instrument peut avantageusement comprendre deux plateformes de support de composants optiques, avec les utilisations suivantes de chacune d'elles :
le séparateur de faisceau, le miroir tertiaire du télescope de type Korsch, le miroir déformable et l'ensemble de saisie d'image peuvent être supportés par une première des plateformes, de sorte que la première plateforme soit dédiée à la première voie d'imagerie, et
une seconde des plateformes peut être dédiée à la seconde voie d'imagerie, en supportant des composants de cette seconde voie d'imagerie à l'exclusion des miroirs primaire et secondaire.
Une telle répartition des voies d'imagerie selon des plateformes séparées permet une conception modulaire de l'instrument d'imagerie. Son assemblage, son réglage optique et son intégration dans un satellite sont ainsi facilités. Une telle conception modulaire permet aussi de reprendre seulement la conception de la première voie d'imagerie, pour un instrument qui est destiné à être dépourvu de la seconde voie d'imagerie.

La première voie d'imagerie peut être fonctionnelle dans le domaine spectral de lumière visible.

La seconde voie d'imagerie peut être une voie d'imagerie infrarouge. Dans ce cas, la seconde plateforme peut supporter en outre un cryostat qui est disposé pour refroidir l'ensemble de saisie d'image additionnel, et aussi une source de rayonnement embarquée qui est disposée pour envoyer temporairement un rayonnement de calibration sur l'ensemble de saisie d'image additionnel.

Avantageusement, la source de rayonnement embarquée peut être disposée en outre de sorte que le rayonnement de calibration qui est envoyé par elle sur l'ensemble de saisie d'image additionnel soit réfléchi par au moins un miroir du télescope additionnel, sur un chemin optique de ce rayonnement de calibration entre la source de rayonnement embarquée et l'ensemble de saisie d'image additionnel. Ainsi, le rayonnement de calibration reprend au moins une partie finale du trajet d'un rayonnement qui est utile pour saisir une image par la seconde voie d'imagerie. De cette façon, la calibration de la voie d'imagerie infrarouge intègre le pouvoir d'émission thermique du miroir du télescope additionnel, ainsi que celui d'une partie au moins de l'environnement du télescope additionnel. La calibration qui est obtenue est plus exacte pour cette raison.

Un second aspect de l'invention propose un satellite, qui comprend un instrument d'imagerie conforme au premier aspect de l'invention, avec ou sans chacun des perfectionnements énumérés. Lorsque l'instrument d'imagerie est à deux voies d'imagerie comme décrit plus haut, la première plateforme peut avantageusement être solidaire d'un châssis du satellite, et la seconde plateforme fixée à la première plateforme. Dans ce cas, préférablement, la seconde plateforme peut ne pas être connectée au châssis du satellite indépendamment de la première plateforme.

Enfin, un troisième aspect de l'invention propose un procédé de saisie d'image à partir d'un satellite qui est en orbite autour de la Terre, dans lequel un instrument d'imagerie conforme au premier aspect de l'invention est situé à bord du satellite, et l'image est saisie en utilisant cet instrument d'imagerie.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1] est un schéma optique d'une première voie d'imagerie d'un instrument d'imagerie conforme l'invention ;
[Fig. 2a] correspond à [Fig. 1] pour une seconde voie d'imagerie de l'instrument d'imagerie, telle que fonctionnelle dans un mode d'acquisition d'image ;
[Fig. 2b] correspond à [Fig. 2a] pour un mode de calibration de la seconde voie de l'instrument d'imagerie ;
[Fig. 3] représente un aménagement de plan focal qui est possible pour la première voie d'imagerie de [Fig. 1] ; et
[Fig. 4] illustre une application de l'instrument d'imagerie.

### Description détaillée de l'invention

Pour raison de clarté, les dimensions des éléments qui sont représentés dans ces figures ne correspondent ni à des dimensions réelles, ni à des rapports de dimensions réels. En outre, certains de ces éléments ne sont représentés que symboliquement, et des références identiques qui sont indiquées dans des figures différentes désignent des éléments identiques.

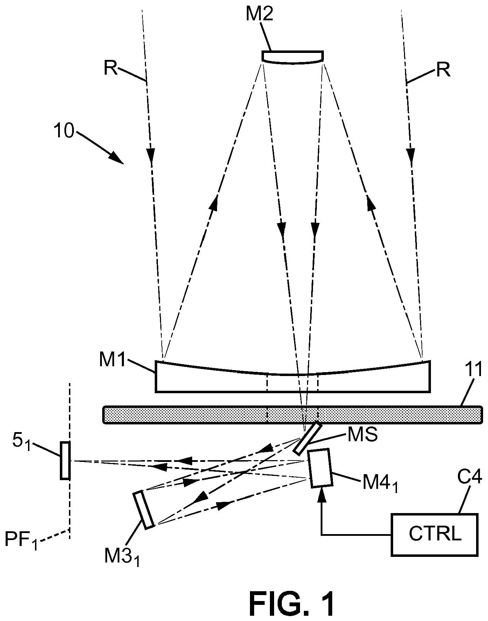

Conformément à [Fig. 1], une première voie d'imagerie d'un instrument qui est désigné globalement par la référence 10, comprend un télescope de type Korsch. Ce télescope comprend le miroir primaire M1, le miroir secondaire M2 et le miroir tertiaire M3₁. Selon l'invention, la première voie d'imagerie comprend en outre un miroir supplémentaire, qui est désigné par la référence M4₁ et qui est situé sur le trajet de la lumière entre le miroir tertiaire M3₁ et le plan focal PF₁. Ainsi, lors d'une acquisition d'image par cette première voie d'imagerie, des rayons lumineux R qui proviennent d'une scène située en avant du miroir primaire M1 sont réfléchis d'abord par ce miroir primaire M1, puis successivement par le miroir secondaire M2, le miroir tertiaire M3₁, et le miroir supplémentaire M4₁, pour converger dans le plan focal PF₁. Lorsque le miroir primaire constitue une pupille d'entrée du télescope de Korsch, celui-ci possède une pupille de sortie qui est située en aval du miroir tertiaire M3₁, le long du trajet de propagation de la lumière dans cette première voie d'imagerie. Le miroir supplémentaire M4₁ est superposé à cette pupille sortie. Il est ainsi conjugué optiquement avec la surface du miroir primaire M1. Pour l'instrument d'imagerie 10 de [Fig. 1], la pupille de sortie où est placé le miroir supplémentaire M4₁ est l'image de la pupille d'entrée, c'est-à-dire l'image du miroir primaire M1, par le miroir secondaire M2, le miroir tertiaire M3₁ et le miroir plan MS (voir plus loin pour la description de ce dernier).

Le miroir supplémentaire M4₁ est à surface réfléchissante déformable, et commandé par un contrôleur C4, noté CTRL. La technologie de réalisation du miroir déformable M4₁ est l'une de celles connues de l'Homme du métier. Ainsi, le contrôleur C4 ajuste la forme de la surface réfléchissante du miroir déformable M4₁ de façon à compenser des défauts de forme de la surface réfléchissante du miroir primaire M1. Cet ajustement de forme peut être réalisé en boucle ouverte, mais de préférence en boucle fermée, par exemple en fonction d'au moins un critère de netteté ou de contraste de l'image qui est formée dans le plan focal PF₁. De cette façon, des défauts statiques ou dynamiques du miroir primaire M1 peuvent être compensés. Un tel ajustement de la forme de la surface réfléchissante du miroir supplémentaire M4₁ peut aussi compenser des défauts de position du miroir secondaire M2 et/ou du miroir tertiaire M3₁.

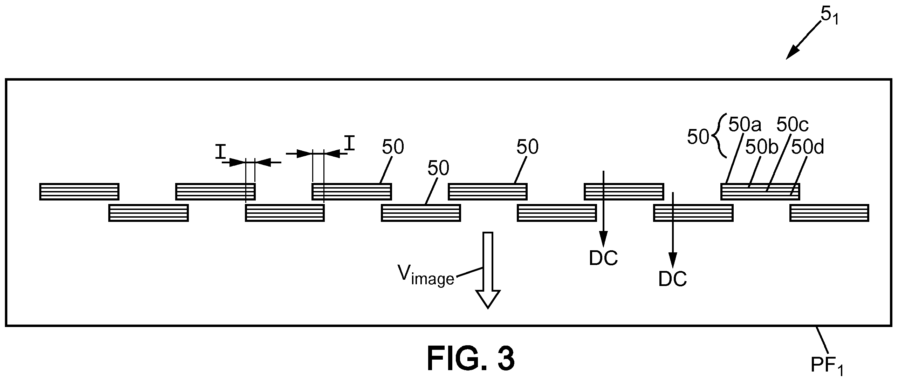

Cette première voie d'imagerie comprend en outre un ensemble de saisie d'image 5₁, qui est disposé dans le plan focal PF₁ du télescope de Korsch. Pour une application de l'instrument d'imagerie où l'image est saisie en mode push-broom, l'ensemble de saisie d'image 5₁ peut comprendre plusieurs capteurs TDI qui sont disposés dans le plan focal PF₁. Comme montré dans [Fig. 3], tous les capteurs TDI, désignés chacun par une référence 50, sont disposés dans le plan focal PF₁ de sorte que leurs directions de colonnes respectives DC soient parallèles à une direction de déplacement V_{image} qui est prévue pour l'image dans le plan focal PF₁ pendant le fonctionnement en mode push-broom. Comme cela apparaît dans la figure, les capteurs d'images TDI peuvent avantageusement être décalés en quinconce dans le plan focal PF₁. Dans ce cas, deux capteurs TDI qui sont voisins sont décalés d'une part perpendiculairement à la direction V_{image} de déplacement de l'image, afin de saisir en image des segments de fauchée successifs dans la largeur de la fauchée, et décalés d'autre part parallèlement à la direction V_{image} de déplacement de l'image, en formant des recouvrements I entre les segments de fauchée successifs, aux extrémités de lignes des capteurs TDI. Ces décalages facilitent en outre la disposition de tous les capteurs TDI dans le plan focal PF₁. Les références 50a-50d désignent des étages successifs de capteur TDI, dont le nombre peut être augmenté très significativement, qui sont décalés au sein de chaque capteur 50 parallèlement à la direction de colonnes DC.

En plus des déformations de sa surface réfléchissante, le miroir supplémentaire M4₁ possède une forme de base qui est courbe. On entend par forme de base du miroir supplémentaire M4₁ la forme qu'il possède lorsque le contrôleur C4 ne commande aucune déformation. Cette forme de base qui est courbe est adaptée pour supprimer ou réduire des distorsions que produit le télescope de Korsch dans l'image qui est formée dans le plan focal PF₁. Grâce à une telle fonction additionnelle du miroir supplémentaire M4₁, i.e. supprimer les distorsions d'image, il n'est pas nécessaire de mettre en oeuvre d'autres méthodes de suppression ou de compensation des distorsions, telles que l'utilisation d'une surface concave ou convexe pour supporter les capteurs d'image 50. Ainsi, dans la première voie d'imagerie de l'instrument 10, il est possible d'utiliser une surface qui est plane pour supporter tous les capteurs TDI dans le plan focal PF₁. Selon la largeur de fauchée voulue, entre 2 et 40 capteurs TDI peuvent être disposés ainsi dans le plan focal PF₁, sur un support commun qui est plan. La planéité du support commun facilite grandement l'assemblage de l'ensemble de saisie d'image 5₁.

Selon une conception possible pour l'instrument d'imagerie 10, les composants optiques d'au moins une partie terminale de la première voie d'imagerie, comprenant le miroir tertiaire M3₁, le miroir supplémentaire déformable M4₁ et l'ensemble de saisie d'image 5₁, peuvent être portés par une plateforme dédiée, désignée par la référence 11. Avantageusement, les miroirs primaire M1 et secondaire M2 peuvent aussi être portés par cette plateforme 11. Lorsque l'instrument d'imagerie 10 est destiné à être intégré à un satellite, la partie terminale de la première voie d'imagerie, ou la première voie d'imagerie complète, peut ainsi être vérifiée et ajustée d'abord à l'extérieur du satellite après avoir été assemblée sur la plateforme 11, puis la plateforme 11 portant la première voie d'imagerie ou sa partie terminale est montée sur un châssis du satellite (non représenté).

La première voie d'imagerie peut être fonctionnelle pour de la lumière visible, par exemple en utilisant des capteurs d'image à base de silicium dans l'ensemble de saisie d'image 5₁.

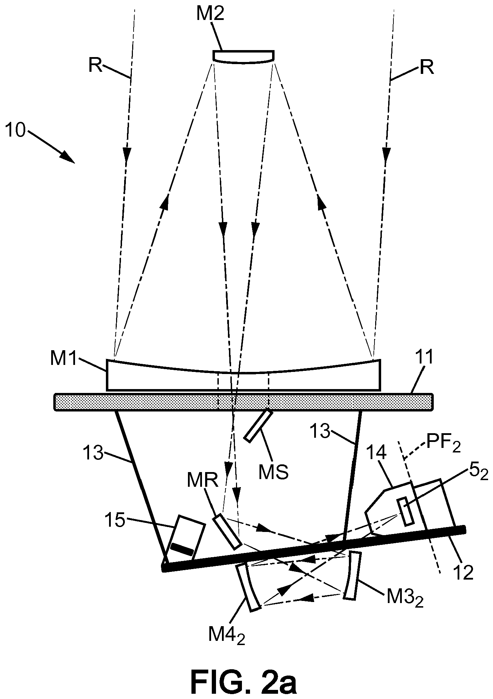

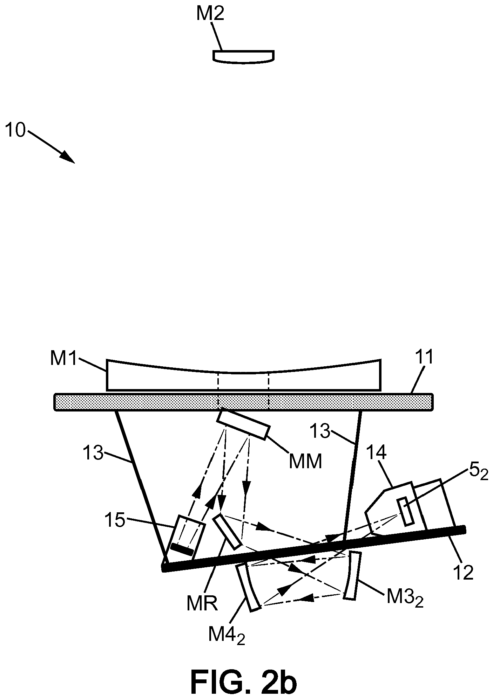

Une seconde voie d'imagerie de l'instrument 10, optionnelle, peut comprendre un télescope additionnel, qui partage le miroir primaire M1 et le miroir secondaire M2 avec la première voie d'imagerie, comme représenté sur [Fig. 2a]. Outre les miroirs M1 et M2, la seconde voie d'imagerie peut comprendre en outre un miroir tertiaire additionnel et un quatrième tertiaire additionnel, qui sont désignés par les références M3₂ et M4₂, respectivement, et un ensemble de saisie d'image additionnel 5₂. L'ensemble de saisie d'image additionnel 5₂ est placé dans le plan focal PF₂ du télescope additionnel qui est formé par les miroirs M1, M2, M3₂ et M4₂. Ainsi, lors d'une acquisition d'image par une telle seconde voie d'imagerie, des rayons lumineux R qui proviennent de la scène en avant du miroir primaire M1 sont réfléchis d'abord par le miroir primaire M1, puis successivement par le miroir secondaire M2, le miroir tertiaire additionnel M3₂ et le quatrième miroir additionnel M4₂, pour converger dans le plan focal PF₂. Eventuellement, un miroir de repliement de faisceau MR peut être ajouté au sein de la seconde voie d'imagerie sur le trajet de la lumière entre les miroirs M2 et M3₂.

Une plateforme additionnelle, désignée par la référence 12, peut être dédiée à une telle seconde voie d'imagerie. Pour une telle conception à plateformes séparées des deux voies d'imagerie, la plateforme 12 peut porter le miroir de repliement de faisceau MR, le miroir tertiaire additionnel M3₂, le quatrième miroir additionnel M4₂ et l'ensemble de saisie d'image additionnel 5₂. La plateforme additionnelle 12 peut alors être fixée sur la plateforme 11 de la première voie d'imagerie par des tirants 13, de façon à être située d'un côté de la plateforme 11 qui est opposé aux miroirs primaire M1 et secondaire M2.

Grâce à la disposition de la seconde voie d'imagerie sur la plateforme additionnelle 12, à l'exception des miroirs primaire M1 et secondaire M2, il est aisé d'ajuster optiquement les composants de cette seconde voie d'imagerie après qu'ils ont été montés sur la plateforme 12 et avant que celle-ci soit fixée à la plateforme 11. Un tel ajustement est couramment appelé alignement optique du module infrarouge. Il peut en effet être réalisé indépendamment du reste de l'instrument d'imagerie, sur un banc de réglage séparé en utilisant une source de faisceau lumineux d'ajustement qui remplace le faisceau de lumière tel que réfléchi par le miroir primaire M1 puis par le miroir secondaire M2 pendant une utilisation de l'instrument d'imagerie. Grâce à cette possibilité d'ajustement de la seconde voie d'imagerie à l'extérieur du reste de l'instrument d'imagerie et à l'extérieur du satellite, la seconde voie d'imagerie peut être ajustée en temps caché pendant que le reste de l'instrument est lui-même en train d'être assemblé, ajusté optiquement et intégré au satellite.

Avantageusement, les deux voies d'imagerie qui partagent les miroirs primaire M1 et secondaire M2 peuvent être séparées par division de champ au niveau d'une image intermédiaire de la scène qui est formée après réflexion de la lumière sur les miroirs primaire M1 et secondaire M2. Pour cela, un séparateur par division de faisceau peut être utilisé, qui peut être constitué par un miroir plan MS, qui est fixe et placé pour être superposé à une partie de l'image intermédiaire, par exemple pour réfléchir les rayons qui convergent dans cette partie d'image intermédiaire vers le miroir tertiaire M3₁ et la fin de la première voie d'imagerie (voir [Fig. 1]). Simultanément, les rayons qui forment l'image intermédiaire sans être incidents sur le miroir de division de faisceau MS se propagent sans déviation jusqu'au miroir de repli MR et la fin de la seconde voie d'imagerie (voir [Fig. 2a]). Pour une telle réalisation de la séparation entre les deux voies d'imagerie, le miroir de division de faisceau MS peut avantageusement être porté par la plateforme 11, puisqu'il n'a d'effet que pour les rayons qui suivent la première voie d'imagerie. Evidemment, d'autres systèmes optiques peuvent être utilisés alternativement pour séparer les deux voies d'imagerie.

La seconde voie d'imagerie peut être fonctionnelle pour de la lumière infrarouge, par exemple en utilisant pour cette seconde voie d'imagerie au moins un capteur d'image à base de germanium ou de tellure de cadmium dans le plan focal PF₂. Lorsque le domaine spectral auquel est dédiée la seconde voie d'imagerie le nécessite, un cryostat 14 peut être prévu sur la plateforme 12, pour contenir l'ensemble de saisie d'image additionnel 5₂.

Enfin, lorsque la seconde voie d'imagerie est une voie infrarouge, une calibration des intensités détectées par l'ensemble de saisie d'image additionnel 5₂ peut être nécessaire. Pour réaliser une telle calibration, l'instrument d'imagerie 10 peut incorporer une source 15 de rayonnement infrarouge qui est disposée pour envoyer temporairement un rayonnement de calibration sur l'ensemble de saisie d'image additionnel 5₂. Conformément à la conception modulaire des voies d'imagerie par rapport aux deux plateformes 11 et 12, la source 15 peut être portée préférablement par la plateforme 12. Dans ce cas, un mécanisme escamotable permet d'envoyer sur l'ensemble de saisie d'image additionnel 5₂ soit le rayonnement de calibration qui est produit par la source 15 pour une étape de calibration, soit la lumière qui provient de la scène à travers le télescope additionnel. Par exemple, le mécanisme escamotable peut comprendre un miroir mobile MM qui est placé temporairement sur le trajet de la lumière entre le miroir secondaire M2 et le miroir de repliement de faisceau MR. Pendant l'étape de calibration, le miroir MM bloque ainsi la lumière qui provient de la scène en direction du miroir de repliement de faisceau MR, et réfléchit simultanément en direction de ce dernier le rayonnement de la source 15. Lorsqu'une image utile est saisie à l'aide de la seconde voie d'imagerie, le miroir mobile MM est retiré, si bien que le rayonnement de calibration ne parvient plus à l'ensemble de saisie d'image additionnel 5₂, et est remplacé par la lumière qui provient de la scène.

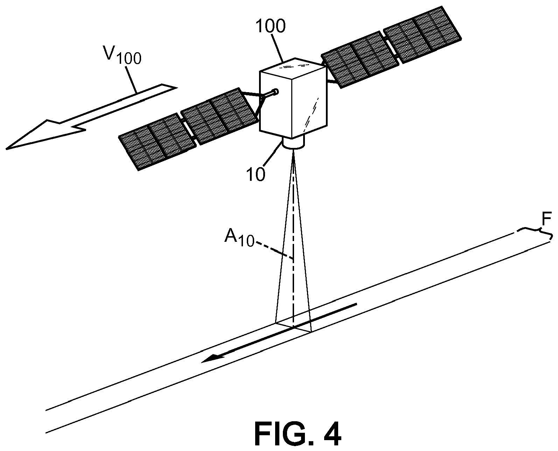

L'instrument d'imagerie 10 peut être utilisé pour une application d'imagerie terrestre à partir d'un satellite en orbite autour de la Terre. Pour cela, et comme illustré par [Fig. 4], l'instrument 10 est embarqué à bord du satellite 100, et son axe optique A₁₀ est dirigé vers la Terre. La vitesse de défilement du satellite est désignée par la flèche V₁₀₀. L'instrument 10 est particulièrement approprié pour le mode push-broom de saisie d'image lorsque l'ensemble de saisie d'image 5, est constitué de capteurs TDI, comme décrit en référence à [Fig. 3]. L'instrument 10 peut être fixe par rapport au satellite 100, et ce dernier est orienté pour que le défilement de l'image dans le plan focal PF₁ soit parallèle à la direction de colonnes DC des capteurs TDI. Alors, l'instrument 10 saisit en image, d'une façon continue dans le temps, le contenu de la fauchée F à la surface de la Terre. Les deux voies d'imagerie peuvent être activées en même temps, pour saisir simultanément des images dans le domaine visible et dans le domaine infrarouge d'un même contenu de fauchée.

Il est entendu que l'invention peut être reproduite en modifiant des aspects secondaires des modes de réalisation qui ont été décrits en détail ci-dessus, tout en conservant certains au moins des avantages cités. Notamment, des composants optiques peuvent être utilisés en remplacement de certains qui ont été décrits, dans la mesure où leurs fonctions sont sensiblement équivalentes. Enfin, l'invention n'est pas limitée au mode push-broom de saisie d'image, et peut être appliquée à des instruments d'imagerie qui mettent en oeuvre d'autres fonctionnements.

## Revendications

1. Instrument d'imagerie (10) comprenant :
- un miroir primaire (M1), un miroir secondaire (M2) et un miroir tertiaire (M3₁) qui constituent ensemble un télescope de type Korsch, le miroir primaire constituant en outre une pupille d'entrée du télescope ;
- un ensemble de saisie d'image (5₁), qui est situé dans un plan focal (PF₁) du télescope de façon à saisir une image formée par de la lumière qui est réfléchie successivement par le miroir primaire (M1), le miroir secondaire (M2) puis le miroir tertiaire (M3₁),
- un miroir déformable (M4₁), qui est placé dans une pupille du télescope autre que la pupille d'entrée ; et
- un contrôleur (C4), qui est adapté pour ajuster une forme du miroir déformable (M4₁), d'une manière variable entre des zones différentes dudit miroir déformable, de façon à compenser au moins un défaut de forme du miroir primaire (M1),
**caractérisé en ce que** le miroir déformable (M4₁) possède une forme de base qui est courbe, en plus d'ajustements de la forme dudit miroir déformable qui sont produits par le contrôleur (C4), ladite forme de base qui est courbe étant adaptée pour réduire des distorsions de l'image formée dans le plan focal (PF₁) par rapport un miroir plan qui serait disposé à la place du miroir déformable.

2. Instrument d'imagerie (10) selon la revendication 1, dans lequel le contrôleur (C4) est adapté en outre pour ajuster la forme du miroir déformable (M4₁) de façon à compenser au moins un défaut de position d'au moins un composant optique de l'instrument d'imagerie.

3. Instrument d'imagerie (10) selon la revendication 1 ou 2, dans lequel la pupille où est placé le miroir déformable (M4₁) est située sur un trajet optique de la lumière qui forme l'image saisie, entre le miroir tertiaire (M3₁) et le plan focal (PF₁).

4. Instrument d'imagerie (10) selon l'une quelconque des revendications précédentes, dans lequel l'ensemble de saisie d'image (5₁) comprend plusieurs capteurs (50) chacun de type à décalage temporel et intégration, lesdits capteurs étant disposés dans le plan focal (PF₁) avec des directions de colonnes (DC) respectives qui sont toutes parallèles à un plan commun, et présentant entre eux des composantes de décalages qui sont perpendiculaires aux directions de colonnes, à l'intérieur dudit plan focal.

5. Instrument d'imagerie (10) selon l'une quelconque des revendications précédentes, comprenant deux voies d'imagerie,
une première des voies d'imagerie comprenant le télescope de type Korsch, le miroir déformable (M4₁) et l'ensemble de saisie d'image (5₁), et
une seconde des voies d'imagerie comprenant un télescope additionnel et un ensemble de saisie d'image additionnel (5₂) qui est situé dans un plan focal (PF₂) du télescope additionnel,
les miroirs primaire (M1) et secondaire (M2) étant communs au télescope de type Korsch et au télescope additionnel, et
l'instrument d'imagerie (10) comprenant en outre un séparateur de faisceau qui est situé sur un trajet de la lumière entre le miroir secondaire (M2) et un miroir tertiaire (M3₂) du télescope additionnel, de façon à séparer spatialement l'une de l'autre les deux voies d'imagerie en aval dudit séparateur de faisceau, par rapport à un sens de propagation de la lumière dans l'instrument d'imagerie.

6. Instrument d'imagerie (10) selon la revendication 5, dans lequel le séparateur de faisceau est superposé à une image intermédiaire qui est formée par les miroirs primaire (M1) et secondaire (M2) lors d'une utilisation de l'instrument d'imagerie, de sorte que ledit séparateur de faisceau ait un fonctionnement par division de champ.

7. Instrument d'imagerie (10) selon la revendication 6, dans lequel le séparateur de faisceau est constitué par un miroir (MS) superposé à une partie de l'image intermédiaire qui est dédiée à l'une des voies d'imagerie, à l'exclusion d'une partie complémentaire de ladite image intermédiaire qui est dédiée à l'autre voie d'imagerie.

8. Instrument d'imagerie (10) selon l'une quelconque des revendications 5 à 7, comprenant deux plateformes (11, 12) de support de composants optiques,
le séparateur de faisceau, le miroir tertiaire (M3₁) du télescope de type Korsch, le miroir déformable (M4₁) et l'ensemble de saisie d'image (5₁) étant supportés par une première (11) desdites plateformes, de sorte que la première plateforme soit dédiée à la première voie d'imagerie, et
une seconde (12) des plateformes étant dédiée à la seconde voie d'imagerie, en supportant des composants de ladite seconde voie d'imagerie à l'exclusion des miroirs primaire (M1) et secondaire (M2).

9. Instrument d'imagerie (10) selon la revendication 8, dans lequel la seconde voie d'imagerie est une voie d'imagerie infrarouge, et dans lequel la seconde plateforme (12) supporte en outre un cryostat (14) qui est disposé pour refroidir l'ensemble de saisie d'image additionnel (5₂), et supporte aussi une source de rayonnement embarquée (15) qui est disposée pour envoyer temporairement un rayonnement de calibration sur ledit ensemble de saisie d'image additionnel.

10. Satellite (100), comprenant un instrument d'imagerie (10) qui est conforme à la revendication 8 ou 9, dans lequel la première plateforme (11) de l'instrument d'imagerie est solidaire d'un châssis du satellite, et la seconde plateforme (12) de l'instrument d'imagerie est fixée à ladite première plateforme.

11. Procédé de saisie d'image à partir d'un satellite (100) qui est en orbite autour de la Terre, dans lequel un instrument d'imagerie (10) conforme à l'une quelconque des revendications 1 à 9 est situé à bord du satellite, et l'image est saisie en utilisant ledit instrument d'imagerie.

## Patentansprüche

1. Bildgebungsinstrument (10), umfassend:
- einen Primärspiegel (M1), einen Sekundärspiegel (M2) und einen Tertiärspiegel (M3₁), welche ein Teleskop vom Korsch-Typ bilden, wobei der Primärspiegel ferner eine Eintrittspupille des Teleskops bildet;
- eine Bilderfassungsanordnung (5₁), welche in einer Fokusebene (PF₁) des Teleskops derart platziert ist, dass ein Bild erfasst wird, welches durch das Licht gebildet wird, welches aufeinander folgend von dem Primärspiegel (M1), dem Sekundärspiegel (M2) und dem Tertiärspiegel (M3₁) reflektiert wird,
- einen verformbaren Spiegel (M4₁), welcher in einer Pupille des Teleskops platziert ist, welche verschieden von der Eintrittspupille ist; und
- eine Steuerung (C4), welche dazu eingerichtet ist, eine Form des verformbaren Spiegels (M4₁) in einer variablen Weise zwischen unterschiedlichen Zonen des verformbaren Spiegels derart anzupassen, dass wenigstens ein Formfehler des Primärspiegels (M1) kompensiert wird,
**dadurch gekennzeichnet, dass** der verformbare Spiegel (M4₁) eine Grundform aufweist, welche gekrümmt ist, wobei ferner Anpassungen der Form des verformbaren Spiegels durch die Steuerung (C4) erzeugt werden, wobei die Grundform, welche gekrümmt ist, dazu eingerichtet ist, die Verzerrungen des Bilds zu reduzieren, welches in der Fokusebene (PF₁) gebildet wird, verglichen mit einem ebenen Spiegel, welcher an der Stelle des verformbaren Spiegels angeordnet würde.

2. Bildgebungsinstrument (10) nach Anspruch 1, wobei die Steuerung (C4) ferner dazu eingerichtet ist, die Form des verformbaren Spiegels (M4₁) derart anzupassen, dass wenigstens ein Positionsfehler von wenigstens einer optischen Komponente des Bildgebungsinstruments kompensiert wird.

3. Bildgebungsinstrument (10) nach Anspruch 1 oder 2, wobei die Pupille, in welcher der verformbare Spiegel (M4₁) platziert ist, an einem optischen Pfad des Lichts angeordnet ist, welches das erfasste Bild bildet, zwischen dem Tertiärspiegel (M3₁) und der Fokusebene (PF₁).

4. Bildgebungsinstrument (10) nach einem der vorhergehenden Ansprüche, wobei die Bilderfassungsanordnung (5₁) mehrere Sensoren (50) umfasst, von welchen jeder vom Zeitverschiebungs- und Integrationstyp ist, wobei die Sensoren an der Fokusebene (PF₁) mit jeweiligen Säulenrichtungen (DC) angeordnet sind, welche alle parallel zu einer gemeinsamen Ebene sind und untereinander Verschiebungskomponenten aufweisen, welche senkrecht zu den Richtungen der Säulen im Inneren der Fokusebene sind.

5. Bildgebungsinstrument (10) nach einem der vorhergehenden Ansprüche, umfassend zwei Bildgebungswege,
wobei ein erster der Bildgebungswege das Teleskop vom Korsch-Typ den verformbaren Spiegel (M4₁) und die Bilderfassungsanordnung (5₁) umfasst, und
ein zweiter der Bildgebungswege ein zusätzliches Teleskop und eine zusätzliche Bilderfassungsanordnung (5₂) umfasst, welche in einer Fokusebene (PF₂) des zusätzlichen Teleskops platziert ist,
wobei die Primär- (M1) und Sekundärspiegel (M2) dem Teleskop vom Korsch-Typ und dem zusätzlichen Teleskop gemein sind, und
das Bildgebungsinstrument (10) ferner einen Strahlteiler umfasst, welcher an einem Lichtpfad zwischen dem Sekundärspiegel (M2) und einem Tertiärspiegel (M3₂) des zusätzlichen Teleskops derart angeordnet ist, dass er räumlich den einen von dem anderen der beiden Bildgebungswege abwärts des Strahlteilers bezüglich eines Propagationssinns des Lichts in dem Bildgebungsinstrument trennt.

6. Bildgebungsinstrument (10) nach Anspruch 5, wobei der Strahlteiler einem Zwischenbild überlagert ist, welches durch die Primär- (M1) und Sekundärspiegel (M2) während einer Verwendung des Bildgebungsinstruments gebildet wird, so dass der der Strahlteiler eine Funktionsweise durch Feldteilung aufweist.

7. Bildgebungsinstrument (10) nach Anspruch 6, wobei der Strahlteiler durch einen Spiegel (MS) gebildet ist, welcher einem Teil des Zwischenbilds überlagert ist, welches einem der Bildgebungswege gewidmet ist, ausgenommen einem komplementären Teil des Zwischenbilds, welches dem anderen Bildgebungsweg gewidmet ist.

8. Bildgebungsinstrument (10) nach einem der vorhergehenden Ansprüche 5 bis 7, umfassend zwei Trage-Plattformen (11, 12) für optische Komponenten, wobei der Strahlteiler, der Tertiärspiegel (M3₁) des Teleskops vom Korsch-Typ, der verformbare Spiegel (M4₁) und die Bilderfassungsanordnung (5₁) durch eine erste (11) der Plattformen derart getragen sind, dass die erste Plattform dem ersten Bildgebungsweg gewidmet ist, und
eine zweite (12) der Plattformen dem zweiten Bildgebungsweg gewidmet ist, indem die Komponenten des zweiten Bildgebungswegs getragen werden, ausgenommen die Primär- (M1) und Sekundärspiegel (M2).

9. Bildgebungsinstrument (10) nach Anspruch 8, wobei der zweite Bildgebungsweg ein Infrarot-Bildgebungsweg ist, und wobei die zweite Plattform (12) ferner einen Kryostaten (14) trägt, welcher dazu angeordnet ist, die zusätzliche Bilderfassungsanordnung (5₂) zu kühlen, und ebenfalls eine aufgesetzte Strahlungsquelle (15) trägt, welche dazu angeordnet ist, zeitweilig eine Kalibrationsstrahlung auf die zusätzliche Bilderfassungsanordnung auszusenden.

10. Satellit (100), umfassend ein Bildgebungsinstrument (10) gemäß Anspruch 8 oder 9, wobei die erste Plattform (11) des Bildgebungsinstruments an einem Körper des Satelliten angebracht ist und die zweite Plattform (12) des Bildgebungsinstruments an der ersten Plattform befestigt ist.

11. Verfahren zum Erfassen eines Bilds von einem Satelliten (100), welcher sich in einer Umlaufbahn um die Erde befindet, wobei ein Bildgebungsinstrument (10) gemäß einem der Ansprüche 1 bis 9 an Bord des Satelliten befindlich ist und das Bild unter Verwendung des Bildgebungsinstruments erfasst wird.

## Claims

1. An imaging instrument (10) comprising:
- a primary mirror (M1), a secondary mirror (M2) and a tertiary mirror (M3₁) which together form a Korsch-type telescope, the primary mirror further forming an entrance pupil of the telescope;
- an image capture assembly (5₁), which is located in a focal plane (PF₁) of the telescope so as to capture an image formed by light reflected successively by the primary mirror (M1), the secondary mirror (M2) and then the tertiary mirror (M3₁),
- a deformable mirror (M4₁), which is placed in a pupil of the telescope other than the entrance pupil; and
- a controller (C4), which is adapted to adjust a shape of the deformable mirror (M4₁), in a variable manner between different zones of said deformable mirror, so as to compensate for at least one shape defect of the primary mirror (M1),
**characterised in that** the deformable mirror (M4₁) has a base shape which is curved, in addition to adjustments to the shape of said deformable mirror produced by the controller (C4), said curved base shape being adapted to reduce distortions of the image formed in the focal plane (PF₁) relative to a planar mirror which would be disposed in place of the deformable mirror.

2. The imaging instrument (10) according to claim 1, wherein the controller (C4) is further adapted to adjust the shape of the deformable mirror (M4₁) so as to compensate for at least one positioning error of at least one optical component of the imaging instrument.

3. The imaging instrument (10) according to claim 1 or 2, wherein the pupil in which the deformable mirror (M4₁) is placed is located in an optical path of the light forming the captured image, between the tertiary mirror (M3₁) and the focal plane (PF₁).

4. The imaging instrument (10) according to any one of the preceding claims, wherein the image capture assembly (5₁) comprises a plurality of sensors (50) each of time-delay-and-integration type, said sensors being disposed in the focal plane (PF₁) with respective column directions (DC) which are all parallel to a common plane, and having offset components therebetween, which offset components are perpendicular to the column directions, within said focal plane.

5. The imaging instrument (10) according to any one of the preceding claims, comprising two imaging channels,
a first of the imaging channels comprising the Korsch-type telescope, the deformable mirror (M4₁) and the image capture assembly (5₁), and
a second of the imaging channels comprising an additional telescope and an additional image capture assembly (5₂) which is located in a focal plane (PF₂) of the additional telescope,
the primary mirror (M1) and secondary mirror (M2) being common to the Korsch-type telescope and to the additional telescope, and
the imaging instrument (10) further comprising a beam splitter which is located in a light path between the secondary mirror (M2) and a tertiary mirror (M3₂) of the additional telescope, so as to spatially separate both imaging channels from one another downstream of said beam splitter, relative to a direction of propagation of light in the imaging instrument.

6. The imaging instrument (10) according to claim 5, wherein the beam splitter is superimposed on an intermediate image which is formed by the primary mirror (M1) and secondary mirror (M2) when the imaging instrument is used, so that said beam splitter operates by field-splitting.

7. The imaging instrument (10) according to claim 6, wherein the beam splitter is formed by a mirror (MS) superimposed on a part of the intermediate image which is dedicated to one of the imaging channels, to the exclusion of a complementary part of said intermediate image which is dedicated to the other imaging channel.

8. The imaging instrument (10) according to any one of claims 5 to 7, comprising two platforms (11, 12) for supporting optical components,
the beam splitter, the tertiary mirror (M3₁) of the Korsch-type telescope, the deformable mirror (M4₁) and the image capture assembly (5₁) being supported by a first platform (11) of said platforms, so that the first platform is dedicated to the first imaging channel, and
a second platform (12) of the platforms being dedicated to the second imaging channel, by supporting components of said second imaging channel to the exclusion of the primary mirror (M1) and secondary mirror (M2).

9. The imaging instrument (10) according to claim 8, wherein the second imaging channel is an infrared imaging channel, and wherein the second platform (12) further supports a cryostat (14) which is disposed so as to cool down the additional image capture assembly (5₂), and also supports an on-board radiation source (15) which is disposed so as to temporarily transmit a calibrating radiation to said additional image capture assembly.

10. A satellite (100) comprising an imaging instrument (10) as claimed in claim 8 or 9, wherein the first platform (11) of the imaging instrument is integral with a chassis of the satellite, and the second platform (12) of the imaging instrument is attached to said first platform.

11. A method for capturing an image from a satellite (100) in orbit around the Earth, wherein an imaging instrument (10) as claimed in any one of claims 1 to 9 is located on board the satellite, and the image is captured using said imaging instrument.
